# EUROPEAN PATENT APPLICATION

(11) **EP 4 513 308 A1**
(43) Date of publication of application: **26.02.2025**
(21) Application number: 24195333.0
(22) Date of filing: 20.08.2024
(51) Int. Cl.: G06F 3/01

(54) **SELECTIVELY UPSAMPLING VISUAL SENSOR DATA FOR EFFICIENT DISPLAY**

(30) Priority: 22.08.2023 US 202363578054 P; 13.08.2024 US 202418802361
(71) Applicant: Meta Platforms Technologies, LLC, Menlo Park, CA 94025 (US)
(72) Inventor: Constable, Benjamin Charles, Menlo Park (US); Sztuk, Sebastian, Menlo Park (US)
(74) Representative: Murgitroyd & Company

(57) **Abstract**

An efficiency manager can selectively upsample portions of captured data, for example to target certain portions of a user's field of view (e.g., pass-through display) for higher quality visuals. For example, the efficiency manager can select, based on user eye tracking, portions of the captured visual data for upsampling and omit upsampling for other portions. The efficiency manager can implement the selective upsampling using a hierarchical mipmap. A mipmap can store visual data at different quality levels. The efficiency manager can sparsely populate a high quality level of the mipmap with the selectively upsampled visual data. Rendering techniques (e.g., graphical processor unit hardware and/or rendering pipelines) can utilize mipmaps to efficiently render visual data for display.

## Description

### TECHNICAL FIELD

The present disclosure is directed to selectively upsampling visual sensor data for efficient display.

### BACKGROUND

Extra reality systems are becoming more prevalent. The visual display generated by these systems involves a high degree of visual data processing, such as when a system displays an immersive environment. Due to these visual data processing demands, system resource efficiency, such as processor utilization, power usage, storage utilization, etc., plays a significant role in the design, production, and functionality of these systems. Artificial reality systems that can generate high quality visual displays while maintaining efficient performance can be particularly beneficial to the user experience.

### SUMMARY

According to a first aspect, there is provided a method for selectively upsampling sensor data for display via an artificial reality (XR) system, the method comprising: capturing, using one or more image capturing devices, visual data of real-world surroundings of the XR system; assigning portions of the captured visual data to two or more categories; selectively upsampling, for portions of the captured visual data assigned to a first category of the two or more categories, a resolution of the captured visual data; populating a data structure by: sparsely populating a high-quality level of the data structure with the selectively upsampled data; and populating one or more other levels of the data structure using the captured visual data; and rendering, by the XR system, a passthrough visual display of the captured real-world surroundings of the XR system, wherein portions of the passthrough visual display that correspond to the captured visual data assigned to the first category are rendered using the sparsely populated high-quality level of the data structure.

Portions of the passthrough visual display that correspond to the portions of the captured visual data not assigned to the first category may be rendered using the populated one or more other levels of the data structure.

Bicubic sampling may be performed to selectively upsample the captured visual data.

The method may further comprise performing eye tracking of a user of the XR system. The portions of the captured visual data may be assigned to the two or more categories based on the performed eye tracking.

The portions of the captured visual data assigned to the first category may correspond to a center region of a user's field of view relative to the performed eye tracking. The portions of the captured visual data assigned to another category of the two or more categories may correspond to a peripheral region of the user's field of view relative to the performed eye tracking. The rendered passthrough visual display may comprise a foveated display comprising portions with different resolution levels.

The method may further comprise displaying, via display hardware of the XR system, the rendered passthrough visual display. A resolution of the one or more image capturing devices may be less than a resolution of the display hardware.

The data structure may comprise a hierarchical Mipmap. The high-quality level of the hierarchical Mipmap may be sparsely populated via the selective upsampling for the portions of the captured visual data assigned to the first category.

The one or more other levels of the hierarchical Mipmap may be populated using the captured visual data and/or the captured visual data after downsampling.

The passthrough visual display may be rendered according to a frequency. The selective upsampling may be performed for a subset of instances rendered according to the frequency or each of the instances rendered according to the frequency.

According to a second aspect, there is provided an artificial reality (XR) system for selectively upsampling sensor data, the XR system comprising: one or more processors; and one or more memories storing instructions that, when executed by the one or more processors, cause the XR system to carry out the method of the first aspect.

According to a third aspect, there is provided a computer-readable storage medium storing instructions for selectively upsampling sensor data, the instructions, when executed by a computing system, cause the computing system to carry out the method of the first aspect.

According to a fourth aspect, there is provided a computer program product comprising instructions which, when the program is executed by a computer, causes the computer to carry out the method of the first aspect.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an extra reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a conceptual diagram illustrating a pass-through visual display for an extra reality system.
Figure 6A is a conceptual diagram illustrating example quality level pattern for a foveated display of an artificial reality system.
Figure 6B is a conceptual diagram illustrating a user field of view with varied display quality levels.
Figure 7 is a flow diagram illustrating a process used in some implementations of the present technology for selectively upsampling visual sensor data for efficient display.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to selectively upsampling visual sensor data for efficient display. Extra reality systems can generate displays using visual data captured by the system and/or captured by connected image capturing devices. An example of such a technique is a pass-through visualization, where an extra reality system generates a display of the user's real-world surroundings (or an augmented version of the real-world surroundings). Extra reality systems may benefit from selective upsampling of captured visual data when generating a pass-through visualization. For example, selective upsampling can reduce the hardware requirements of the system's image capturing device(s) and reduce the processing load. As a result, visual data captured at a lower resolution can be leveraged to generate a higher resolution pass-through displays. Implementations selectively upsample portions of captured visual data to improve the quality of the display to the user while maintaining efficient processing and/or resource utilization levels.

An efficiency manager can selectively upsample portions of captured visual data, for example to target certain portions of a user's field of view (e.g., pass-through display) for higher quality visuals. An example technique involves selection of visual data via foveated display. In foveated display, different portions of the user's field of view are selected for different quality levels based on the user's focus. For example, in response to user eye tracking, the central portion of the user's field of view can be targeted for high quality visuals while other portions can be targeted for mid-level and/or low-level quality. The efficiency manager can select, based on user eye tracking, portions of the captured visual data for upsampling and omit upsampling for other portions of the captured visual data.

The efficiency manager can implement the selective upsampling using a hierarchical mipmap. A mipmap can store visual data at different quality levels. Rendering techniques (e.g., graphical processor unit hardware and/or rendering pipelines) can utilize mipmaps to efficiently render visual data for display. The efficiency manager can sparsely populate a high quality level of the mipmap with the selectively upsampled visual data. In other words, portions of the captured visual data/user's field of view are selected for upsampling, and the high quality level of the mipmap can be populated for these selected portions. Other levels of the hierarchical mipmap (e.g., mid-level quality, low-level quality, etc.) can be populated using A) the captured visual data and/or B) downsampled versions of the captured visual data. In some implementations, the efficiency manager may not populate the high quality level of the mipmap for portions of the captured visual data/user's field of view that are not selected for upsampling, resulting in a sparsely populated mipmap.

The efficiency manager can then render the pass-through visual display to the user of the artificial reality system. Portions of the pass-through visual display can be selectively upsampled while other portions are not. For example, the rendered pass-through display can be a foveated display. The efficiency manager can access the sparsely populated mipmap to render the pass-through display. Selectively upsampling captured visual data assigned to a high-quality level and sparsely populating the high-quality level of a mipmap with this data can support efficient rendering of a foveated display, for example using artificial reality system hardware.

The technology described herein is generally described in use with an artificial reality system. However, it's contemplated that this technology can be used with other sensor and/or display systems also, such as mobile devices, monitors, projectors, car displays, televisions, cameras, depth sensors, IR sensors, sonar systems, LIDAR systems, audio sensors, etc.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or"XR," as used herein, refers to any of VR, AR, MR, or any combination or hybrid thereof.

Implementations improve processing efficiency when generating pass-through visuals for high-resolution displays by selectively upsampling captured resolution, and sparsely populating visual data structure(s), such as mipmap levels. The progression towards high-resolution displays in XR headsets has increased the utility of upsampling of captured visuals, as sensor resolution may be constrained due to cost, size, power usage, data bandwidth, and/or hardware usage inefficiency. Implementations use foveation to target certain portions of a user's field of view with high-level resolution, while other portions are relegated to middle or low levels of resolution. Implementations then perform selective upsampling, such as using bicubic sampling, linear sampling (e.g., bilinear sampling, trilinear sampling, etc.), and the like, according to the resolution target for the portion. The visual data structure(s) use to generate the XR display, such as mipmap levels, can be sparsely populated so that display regions that are targeted for middle or low resolution levels do not waste hardware resources on unnecessary upsampling.

In some implementations, sparsely populated mipmap levels integrate with rendering pipelines for the XR display. In particular, hardware resources can execute rendering pipelines that access the sparsely populated mipmap levels in accordance with the assigned quality level for the portion of visual data. The solution provides flexibility for artificial reality system designs, such as systems with high-resolution displays. For example, the sensor resolution can be lower than the display resolution, and implementations can efficiently upsample visual data. Assigning different portions of pass-through visuals to different quality levels can conserve processing efficiency and improve system resource utilization.

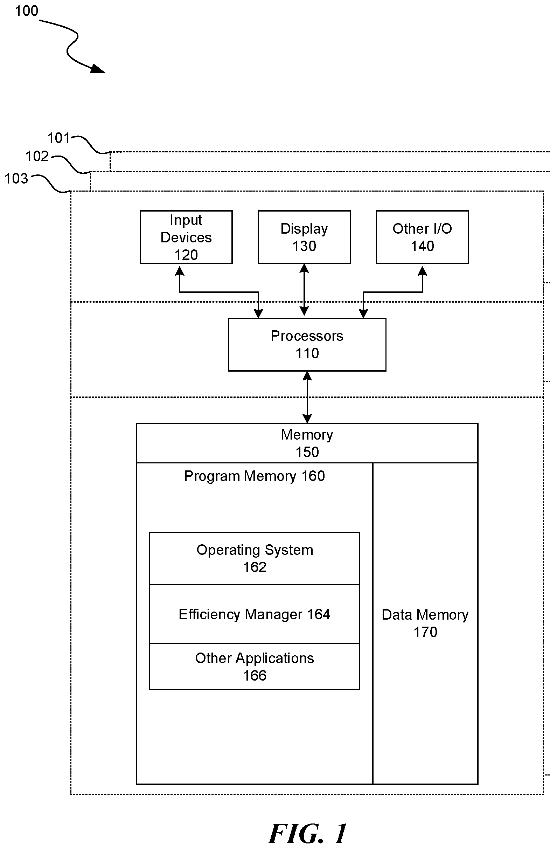

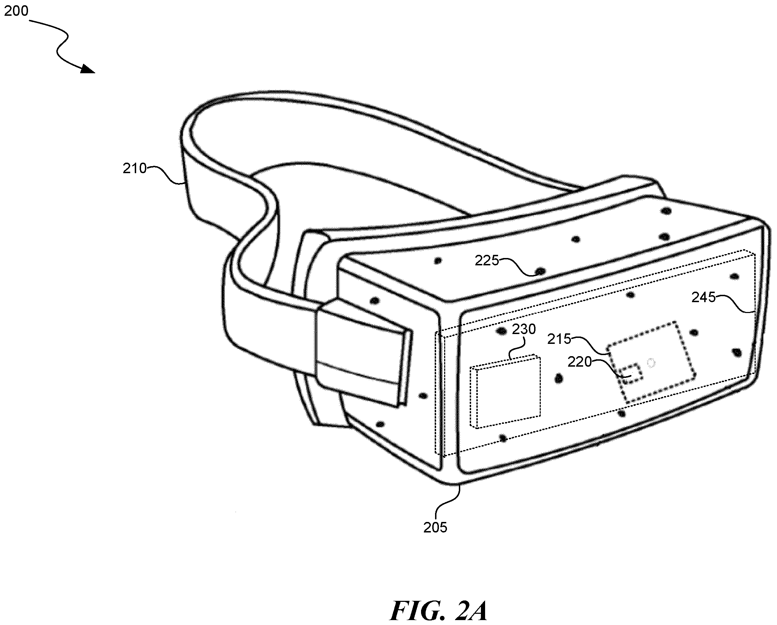

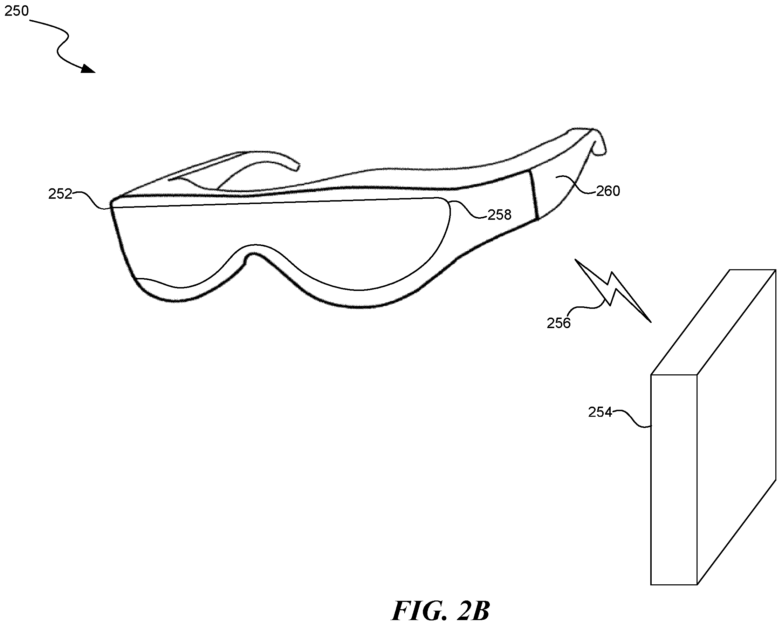

Several implementations are discussed below in more detail in reference to the figures. Figure 1 is a block diagram illustrating an overview of devices on which some implementations of the disclosed technology can operate. The devices can comprise hardware components of a computing system 100 that selectively upsample visual sensor data for efficient display. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, efficiency manager 164, and other application programs 166. Memory 150 can also include data memory 170 that can include, e.g., captured visual data, up-sampled and/or down-sampled visual data, quality map(s), configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various examples, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

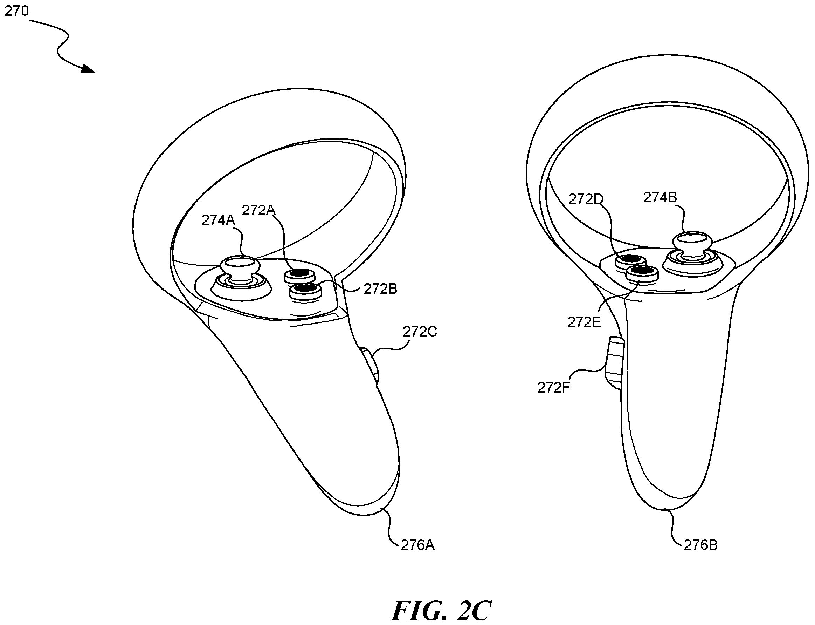

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

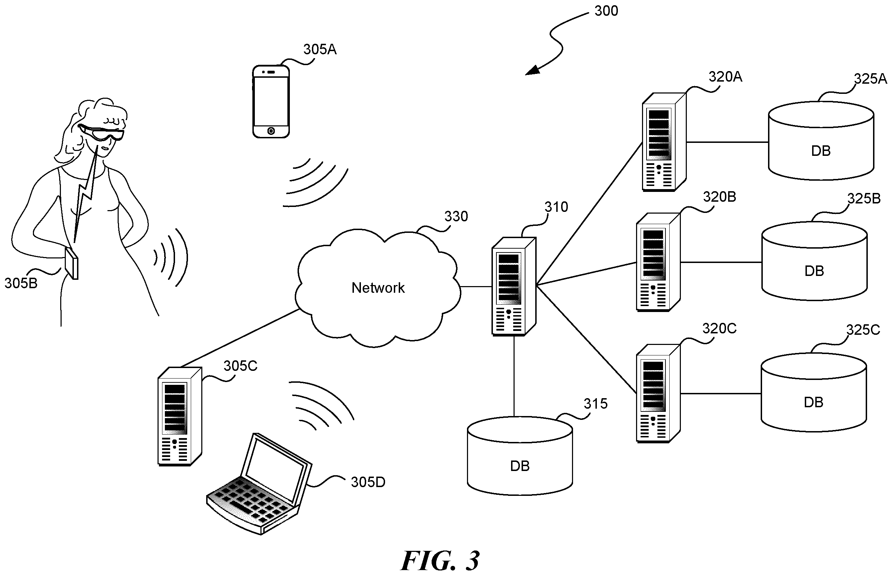

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

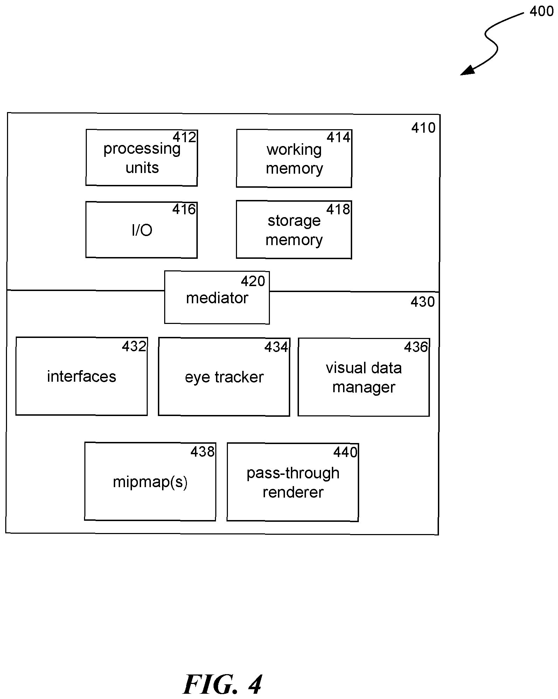

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for selectively upsampling visual sensor data for efficient display. Specialized components 430 can include eye tracker 434, visual data manager 436, mipmap(s) 438, pass-through renderer 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

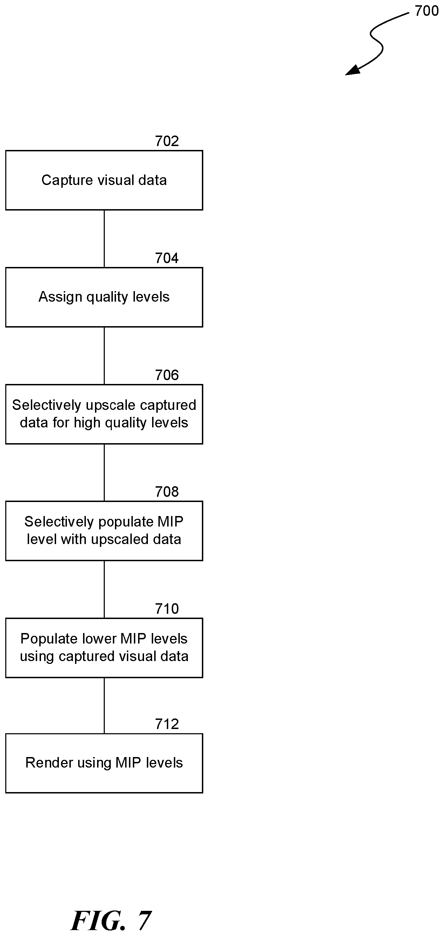

Eye tracker 434 can track a user's eye(s) using captured images of the user's face. Implementations of eye tracker 434 receive user eye images from an HMD that captures images of the user's eyes. Eye tracker 434 can comprise one or more estimation models (e.g., trained machine learning model, or any other suitable model) that estimate the user's eye positioning (e.g., pupil location, user gaze, etc.) based on the user eye images and/or features extracted from the user eye images. In some implementations, one or more lights of the HMD can illuminate either or both of the user's eyes, and one or more cameras can capture a reflection of this light to determine eye position (e.g., based on a set of reflections around the user's cornea, etc.). For example, estimation model(s) can estimate eye position based on these captured images of the user's eye(s). Any other suitable eye tracking technique can be used to track the user's eye position(s). Additional details on eye tracker 434 are provided below in relation to Figure 7 and block 704.

Visual data manager 436 can selectively upsample portions of captured visual data and sparsely populate data structure(s) (e.g., Mipmap(s) 438) with upsampled visual data. For example, visual data manager 436 can assign portion(s) of captured visual data to quality levels, and selectively upsample portion(s) of captured visual data that correspond to a high quality level (e.g., quality level that meets a threshold). Visual data manager 436 can then sparsely populate the data structure(s) with the selectively upsampled visual data. Additional details on visual data manager 436 are provided below in relation to Figure 7 and blocks 706, 708, and 710.

Mipmap(s) 438 can store visual data at different quality levels. For example, mipmap(s) 438 can be hierarchical such that different map levels store visual data at different quality levels (e.g., high, medium, and low, etc.). Portions of the map levels can be populated with raw sensor data and portion of the map level(s) can be populated with selectively upsampled visual data and/or selectively downsampled visual data. Mipmap(s) 438 can be implemented via any suitable data structure and/or computer graphics software techniques. Additional details on mipmap(s) 438 are provided below in relation to Figure 7 and blocks 708, 710, and 712.

Pass-through renderer440 can render a visual pass-through display using captured visual data from image sensing devices. For example, the visual data captured and processed (e.g., upsampled, downsampled, etc.) can be rendered to display an XR environment to a user, such as an XR environment from the perspective of the user. Pass-through renderer 440 can utilize GPU(s) and other suitable processor(s) to perform a rendering pipeline and render the pass-through display. In some implementations, the rendered pass-through display can include portions at different quality levels, such as a foveated pass-through display. Additional details on pass-through renderer 440 are provided below in relation to Figure 7 and block 712.

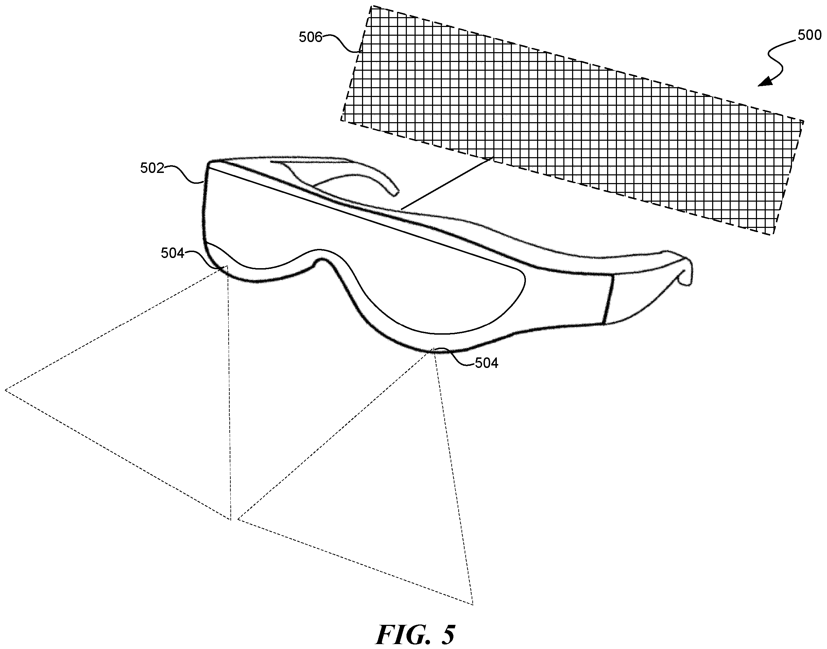

Figure 5 is a conceptual diagram illustrating a pass-through visual display for an artificial reality system. Diagram 500 illustrates XR system 502, image capturing devices 504, and pass-through display 506. Image capturing devices 504 can capture the real-world surroundings of XR system 502. XR system 502 can process the captured visual data and generate pass-through display 506. For example, pass-through display 506 can comprise an XR environment, from the user's perspective, of the user's real-world environment.

In some implementations, pass-through display 506 can comprise portions with different resolutions. For example, XR system 502 can selectively upsample portions of the visual data captured via image capturing devices 504. The portions can be selected for upsampling in response to user eye tracking. For example, the portions of the visual data that correspond to a focused (e.g., central) portion of the user's field of view can be selectively upsampled. In some implementations, pass-through display 506 can comprise a foveated display.

In some implementations, the configuration of the upsampled portion(s) of the user's field of view (e.g., size, orientation, etc.) and/or the degree of upsampling can be based on eye tracking accuracy and/or confidence metrics. For example, eye tracking with high confidence metrics can target smaller portion(s) for upsampling, and thus a higher degree of upsampling can be performed. When eye tracking is reported with lower confidence metrics, larger portion(s) may be targeted for upsampling and thus the degree of upsampling may be reduced (e.g., to manage the processing load put on hardware).

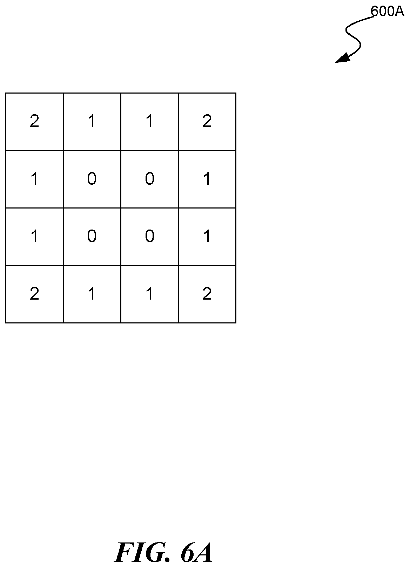

Figure 6A is a conceptual diagram illustrating an example quality level pattern for a foveated display of an artificial reality system. Diagram 600A illustrates portions of a foveated display that correspond to different quality levels. In the illustrated example, level 0 corresponds to a high-quality level, level 1 to a mid-quality level, and level 2 to a low-quality level. Any other suitable quality level assignment can be implemented. The foveated display is generated in response to eye tracking. In the illustrated example, the center of diagram 600A represents the center of the user's vision, and accordingly the center is assigned to level 0. The periphery of diagram 600A represents the periphery of the user's vision, and different portions of the periphery are assigned to levels 1 and 2. Any other suitable quality level pattern that assigns different quality levels to different portion(s) of diagram 600A can be implemented.

In some implementations, the quality levels are dynamically assigned to captured visual data in response to user eye tracking. For example, eye tracking can be used to identify a center portion of a user's field of view and/or peripheral portions of a user's field of view. Captured visual data that corresponds to the center region of the user's field of view can be assigned to level 0 and captured visual data that corresponds to the peripheral regions of the user's field of view can be assigned to levels 1 or 2. Implementations can include two, three, four, or many more quality levels. Captured visual data assigned to level 0 can be selectively upsampled to populate a high-quality level of the hierarchical mipmap. In this example, the captured visual data that is assigned to levels 1 or 2 is not selectively upsampled, and thus the high-quality level the hierarchical mipmap for this captured visual data may be empty (e.g., the high-quality level of the hierarchical mipmap may be sparsely populated). Other levels of the hierarchical mipmap below the high-quality level may be populated with the captured visual data and/or the captured visual data after downsampling.

The quality levels can correspond to a combination of quality factors, such as resolution, variable rate shading (VRS), or any other suitable quality factors. Example quality factors for each quality level are illustrated below in Table 1:

**Table 1**

| Quality Level | Data Source | Lowest MIP Level | VRS Level |
|---|---|---|---|
| 0 | Upsampled | 0 | 1x1 |
| 1 | Raw | 1 | 2x2 |
| 2 | Raw | 1 | 4x4 |

Upsampled data can comprise visual data captured at a given resolution (e.g., a resolution that corresponds to the image capturing device(s)) that is selectively upsampled, such as using bicubic sampling or any other suitable upsampling technique. Raw data can comprise visual data with a resolution as captured by the image capturing device(s). For example, image capturing device(s) can comprise physical and/or software components that support image capture at a given resolution (e.g., 2 Megapixels (MP), 4 MP, 8MP, 16MP, etc.). In some implementations, by performing the selective upsampling the image resolution supported by the image capturing device(s) can be doubled (e.g., 4 MP to 8 MP, 8 MP to 16 MP, etc.), tripled, quadrupled (e.g., 4 MP to 16MP, etc.), and the like. In this example, an XR system with high-resolution display(s) can utilize lower resolution image capturing device(s) and efficiently upsample to provide high resolution visual displays. In some implementations, the foveated display can be a pass-through display of the user's real-world surroundings, and the upsampled image resolution can provide displays of the user's real-world surroundings with improved resolution.

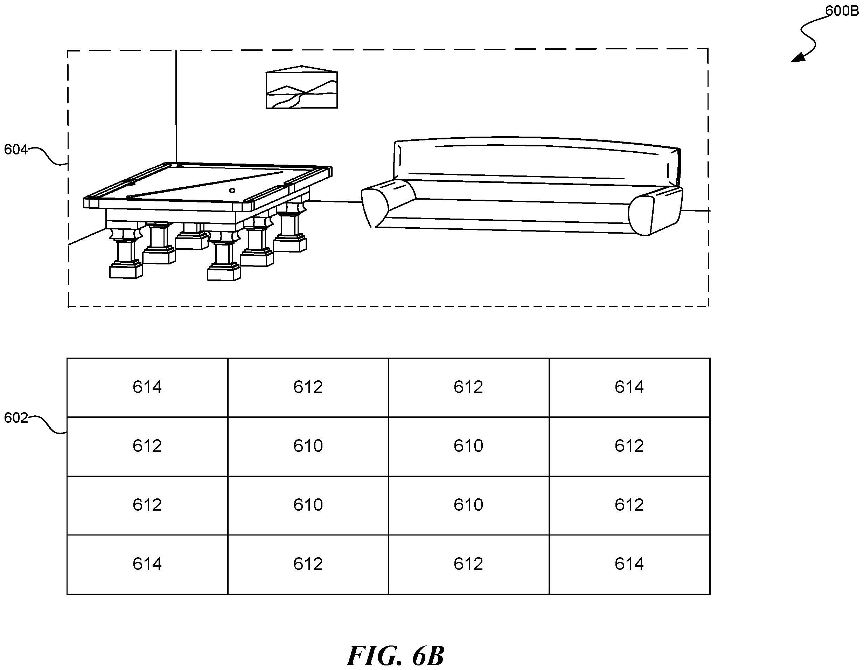

Figure 6B is a conceptual diagram illustrating a user field of view with varied display quality levels. Diagram 600B illustrates quality levels 602, including high-quality level 610, mid-quality level 612, and low-quality level 614, and captured visual data 604. Captured visual data 604 can represent visual data captured by image capturing device(s) that are part of or in communication with an XR system. Quality levels 602 can be applied to the visual data to generate a foveated display. For example, portions of the captured visual data can be upsampled, such as portions that are assigned high-quality level 610. In some implementations, captured visual data 604 can be processed using quality levels 602 to generate multiple foveated displays, such as a display for each of a user's eyes. Such a display can achieve an immersive foveated display.

In some implementations, applying quality levels 602 to captured visual data 604 includes sparsely populating a hierarchical mipmap with captured visual data 604 and/or upsampled captured visual data. For example, captured visual data 604 can be captured at a given resolution, such as the resolution of the image capturing device(s). The mid-quality and/or low-quality levels of the hierarchical mipmap can be populated with this raw captured visual data and/or downsampled visual data. The high-quality level(s) of the mipmap can be selectively populated with upsampled visual data. For example, the portions of captured visual data 604 assigned to high-quality level 610 can be selectively upsampled, and this upsampled data can sparsely populate the high-quality level of the hierarchical mipmap. In other words, the high-quality level of the mipmap may be empty for portions of captured visual data 604 that are not assigned to high-quality level 610. In some implementations, quality levels of the hierarchical mipmap below the resolution of captured visual data 604 (e.g., resolution of the image capturing device(s)) can be automatically populated via automatic MIP generation techniques.

In some implementations, the manner in which captured visual data is assigned to different quality levels can be based on user eye tracking and/or the user's field of view. For example, captured visual data 604 can comprise multiple portions, each of which can comprise pixel regions (e.g., 16 x16 pixel region, 32 x 32 pixel region, etc.). With respect to diagram 600B, quality levels 602 can comprise an example pattern such that each of quality levels 610, 612, and 614 corresponds to a pixel region relative to a given field of view for the user. In this example, the captured visual data is assigned to different quality levels based on the pixel region in which it is located given the user's field of view. Any other suitable pixel region size and/or quality level pattern can be used to assign captured visual data to quality level.

In some implementations, the manner in which pixel regions are assigned to quality level can be based on eye tracking confidence levels. For example, eye tracking with high confidence metrics (e.g., eye tracking metrics that meets a confidence criteria or threshold) can target smaller portion(s) for upsampling (e.g., smaller pixel region sizes). This can result in a higher degree of captured visual data that is assigned to a high-quality level and thus a higher degree of upsampling can be performed. Eye tracking with low confidence metrics (e.g., eye tracking metrics that do not meet a confidence criteria or threshold) can target larger portion(s) for upsampling (e.g., larger pixel region sizes). This can result in a lower degree of captured visual data that is assigned to a high-quality level and thus the degree of upsampling may be reduced (e.g., to manage the processing load put on hardware). In other words, captured visual data can be grouped according to pixel region and assigned to quality levels by pixel region. In this example, the pixel region sizes can be dynamic based on a confidence metric for user eye tracking.

Downsampling can be performed by discarding captured visual data (e.g., selecting a subset of pixels) to reduce the resolution, such as reducing 512 x 512 pixel visual data to 256 x 256 pixels. Upsampling can be performed by augmenting captured visual data to increase the resolution, such as increasing 512 x 512 pixel visual data to 1024 x 1024 pixels. In some examples, upsampling includes adding pixel data based on aggregating pixels values (e.g., RGB values) from nearby pixels. Examples of upsampling include bicubic sampling, linear sampling, and the like. Bilinear sampling uses visual data coordinates to find a number of nearest sample(s) (e.g., pixel values), such as the four nearest pixels, and mixes them together in a linear interpolation based on distances from these samples. Implementations can also implement trilinear sampling. Bicubic interpolation extends this from linear interpolation on each axis (which is a straight line in 2D space) to a cubic interpolation on each axis (which is a third order polynomial). Where two points are used to construct a straight line, four points are used to make a cubic polynomial. In some implementations, the cubics can be calculated as splines to give smoother transitions between points. In some implementations, hardware can be configured with bilinear texture samplers, and multiple reads via the bilinear texture samplers (e.g., four) can be used to accomplish cubic sampling.

In some implementations, hardware resources (e.g., processors, such as CPUs and/or GPUs) can perform a rendering pipeline using the sparsely populated mipmap. For example, the rendering pipeline can render portions of the display according to the assigned quality level by accessing the mipmap level that corresponds to the assigned quality level. In some implementations, the assigned quality level can also configure VRS during performance of the rendering pipeline.

In some implementations, a pass-through visualization can be rendered according to a frequency (e.g., 60hz) and upsampling can be performed for a subset of the rendered instances (e.g., 30hz, 15hz, etc.) or for each of the rendered instances (e.g., 60hz). For example, every instance can be selectively upsampled, every other instance can be selectively upsampled (e.g., upsampled according to the portion(s) targeted for a high-quality level), and the like. In some implementations, upsampling can be paused in response to detection of certain user conditions, such as large user head movements that cause content distortions.

Those skilled in the art will appreciate that the components illustrated in Figures 1-5, 6A, and 6B described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 7 is a flow diagram illustrating a process used in some implementations of the present technology for selectively upsampling visual sensor data for efficient display. In some implementations, process 700 is performed by an XR system. Process 700 can be triggered by initiating the display of or continuing the display of an XR environment to a user.

At block 702, process 700 can capture visual data via image capturing device(s). For example, the XR system can include and/or communicate with camera(s) that capture the real-world surroundings of the user/XR system. In some implementations, the XR system can generate a pass-through display of the user's real-world surroundings using the captured visual data. The image capturing device(s) can comprise a capture resolution, and implementations can selectively upscale portions of captured visual data such that the generated pass-through display of the user's real-world surroundings comprises portions with a display resolution that is greater than the capture resolution.

At block 704, process 700 can assign quality levels to the captured visual data. For example, the captured visual data can be processed to render visual data that immerse the user in the pass-through visualization. Quality levels, or categories, can be assigned to portions of the captured visual data according to user eye tracking. The XR system can track the user's eyes and identify which portion of the pass-through visuals are focused on by the user (e.g., which portions are in the center of the user's field of view according to the eye tracking). The captured visual data can be assigned different quality levels or categories, such as low-quality, medium-quality, and high-quality, based on the eye tracking. For example, the center of the user's focus can be assigned the high-quality level while the periphery can be assigned the medium-quality or low-quality levels. In some implementations, captured visual data can be configured as a plurality of pixel regions, and different pixel regions can be assigned to different quality levels. For example, a predetermined and/or dynamic pattern can assign pixel regions to quality level according to which regions are in the center of the user's focus and which regions are in the periphery of the user's focus.

In some implementations, the portions of the captured visual data assigned to a high-quality level correspond to a center region of a user's field of view relative to performed eye tracking, and the portions of the captured visual data assigned to a medium-quality level or low-quality level correspond to a peripheral region of the user's field of view relative to the performed eye tracking. In some implementations, the quality level(s) can be assigned to captured visual data (e.g., pixel regions) based on eye tracking confidence metrics.

At block 706, process 700 can selectively upsample captured visual data for portions assigned to high-quality levels. For example, the portions of the captured visual data that are assigned to the high-quality level can be selectively upsampled. Examples of upsampling include bicubic sampling, linear sampling, and the like.

At block 708, process 700 can selectively populate high-quality levels of a mipmap (e.g., data structure) with upsampled visual data. For example, a hierarchical mipmap can store versions of visual data at different quality levels (e.g., resolutions). The high-quality level(s) of the hierarchical mipmap can be populated for the portions of the captured visual data assigned to the high-quality level(s) using the selectively upsampled visual data. For other portions of captured visual data that are assigned to other quality levels, the high-quality level(s) of the hierarchical mipmap can be empty, thus achieving a sparsely populated hierarchical mipmap.

At block 710, process 700 can populate other levels of the hierarchical mipmap. For example, mid-quality levels and/or low-quality levels of the mipmap can be populated with the captured visual data and/or downsampled versions of the captured visual data.

At block 712, process 700 can render, using the hierarchical mipmap, the user's passthrough display. For example, hardware resources (e.g., processor(s), such as CPUs and/or GPUs) can execute a rendering pipeline to render a display with different quality levels (e.g., resolution levels, etc.). The display can comprise pass-through visuals of the user's real-world surroundings, where the portions of the display that are focused on by the user, such as the center of the user's vision according to eye tracking, are displayed at a higher resolution than the periphery of the user's vision. In some implementations, the generated display is a foveated display.

In some implementations, portions of the passthrough visual display that correspond to the captured visual data assigned to the high-quality level are rendered using the sparsely populated high-quality level of the hierarchical mipmap. In some implementations, portions of the passthrough visual display that correspond to the portions of the captured visual data not assigned to the high-quality level (e.g., medium-quality level and/or low-quality level) are rendered using the populated one or more other levels of the hierarchical mipmap. In some implementations, the passthrough visual display is rendered by the hardware resources according to a frequency (e.g., 60hz), and the selective upsampling is performed for a subset of instances rendered according to the frequency or each of the instances rendered according to the frequency.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific examples and implementations have been described herein for purposes of illustration, but various modifications can be made without deviating from the scope of the embodiments and implementations. The specific features and acts described above are disclosed as example forms of implementing the claims that follow. Accordingly, the examples and implementations are not limited except as by the appended claims.

## Claims

1. A method for selectively upsampling sensor data for display via an artificial reality (XR) system, the method comprising:
capturing, using one or more image capturing devices, visual data of real-world surroundings of the XR system;
assigning portions of the captured visual data to two or more categories;
selectively upsampling, for portions of the captured visual data assigned to a first category of the two or more categories, a resolution of the captured visual data;
populating a data structure by:
sparsely populating a high-quality level of the data structure with the selectively upsampled data; and
populating one or more other levels of the data structure using the captured visual data; and
rendering, by the XR system, a passthrough visual display of the captured real-world surroundings of the XR system, wherein portions of the passthrough visual display that correspond to the captured visual data assigned to the first category are rendered using the sparsely populated high-quality level of the data structure.

2. The method of claim 1, wherein portions of the passthrough visual display that correspond to the portions of the captured visual data not assigned to the first category are rendered using the populated one or more other levels of the data structure.

3. The method of claim 1 or 2, wherein bicubic sampling is performed to selectively upsample the captured visual data.

4. The method of any preceding claim, further comprising:
performing eye tracking of a user of the XR system, wherein the portions of the captured visual data are assigned to the two or more categories based on the performed eye tracking.

5. The method of claim 4, wherein:
the portions of the captured visual data assigned to the first category correspond to a center region of a user's field of view relative to the performed eye tracking,
the portions of the captured visual data assigned to another category of the two or more categories correspond to a peripheral region of the user's field of view relative to the performed eye tracking, and
the rendered passthrough visual display comprises a foveated display comprising portions with different resolution levels.

6. The method of any preceding claim, further comprising:
displaying, via display hardware of the XR system, the rendered passthrough visual display, wherein a resolution of the one or more image capturing devices is less than a resolution of the display hardware.

7. The method of any preceding claim, wherein the data structure comprises a hierarchical Mipmap, and the high-quality level of the hierarchical Mipmap is sparsely populated via the selective upsampling for the portions of the captured visual data assigned to the first category.

8. The method of claim 7, wherein the one or more other levels of the hierarchical Mipmap are populated using the captured visual data and/or the captured visual data after downsampling.

9. The method of any preceding claim, wherein the passthrough visual display is rendered according to a frequency, and the selective upsampling is performed for a subset of instances rendered according to the frequency or each of the instances rendered according to the frequency.

10. An artificial reality (XR) system for selectively upsampling sensor data, the XR system comprising:
one or more processors; and
one or more memories storing instructions that, when executed by the one or more processors, cause the XR system to carry out the method of any preceding claim.

11. A computer-readable storage medium storing instructions for selectively upsampling sensor data, the instructions, when executed by a computing system, cause the computing system to carry out the method of any of claims 1 to 9.

12. A computer program product comprising instructions which, when the program is executed by a computer, causes the computer to carry out the method of any of claims 1 to 9.
